Europäisches Patentamt

(19) European Patent Office

Office européen des brevets

(11) EP 0 832 916 A2

(12) **EUROPEAN PATENT APPLICATION**

(43) Date of publication:
01.04.1998 Bulletin 1998/14

(51) Int. Cl.$^6$: **C08J 5/18**, B32B 27/32
// C08L23:08, C08L29:04

(21) Application number: 97116365.4

(22) Date of filing: 19.09.1997

(84) Designated Contracting States:
AT BE CH DE DK ES FI FR GB GR IE IT LI LU MC NL PT SE
Designated Extension States:
AL LT LV RO SI

(30) Priority: 26.09.1996 JP 275376/96
01.04.1997 JP 96406/97

(71) Applicant:
Kureha Kagaku Kogyo Kabushiki Kaisha
Niiharu-gun, Ibaraki (JP)

(72) Inventors:
• Tsutomu, Uehara
Niiharu-gun, Ibaraki (JP)
• Atsushi, Ogino
Niiharu-gun, Ibaraki (JP)
• Tomonori, Hosoda
Niiharu-gun, Ibaraki (JP)

(74) Representative:
VOSSIUS & PARTNER
Siebertstrasse 4
81675 München (DE)

(54) **Selectively gas permeable film for packaging water-containing foods**

(57) A selectively gas permeable film having at least one layer composed of a composition comprising: 50-98% by weight of a saponified product of ethylene-vinyl acetate copolymer; 0-45% by weight of polyvinyl alcohol having a saponification value of 60-95 mol.%; and 0.1% or higher by weight of at least one species having an average molecular weight of 4,000 or lower selected from the group consisting of monomers, oligomers, and polymers of either one of alkylene glycol or hydroxy acid. The content of the at least one species does not exceed its saturation solubility for the sum of the saponified product of ethylene-vinyl acetate copolymer and the polyvinyl alcohol. The selectively gas permeable film has a high ratio of carbon dioxide gas transmission rate to oxygen gas transmission rate. The film is very useful for packaging water-containing foods, especially fermented foods.

EP 0 832 916 A2

**Description**

This invention relates to a selectively gas permeable film and a laminated film using the same for packaging water-containing foods.

In recent years, as foods diversify, optimum packaging films for foods have come into demand in the packaging industry. For example, because live bacteria are added to natural cheese for fermentation, carbon dioxide is generated not only during the aging stage but also during the distribution stage. Thus, when cheese is packaged and sealed using a common plastic film, the package expands due to the generated carbon dioxide gas, resulting in damage to the packaging film or deterioration of the contents thereof. Thus, a packaging film for foods having high permeability of carbon dioxide gas is in high demand.

On the other hand, the characteristic of low permeability of oxygen gas is required for packing material for not only cheese but also for other foods containing water because oxygen facilitates growth of mold and oxidation of fats. Packing material having the characteristics of high permeability of carbon dioxide but low permeability of oxygen gas are required not only for fermented foods such as cheese and miso, but also for vegetables, fruit, and coffee beans, for preservation purposes. However, all plastic materials having high permeability of carbon dioxide gas have high permeability of oxygen gas, substantially without exception. Thus, development of packing material, which is nearly impermeable to oxygen gas and has a high ratio of carbon dioxide gas transmission rate to oxygen gas transmission rate, is in high demand.

The present inventors discovered that a composition constituted by a specific polyvinyl alcohol, a polyalkylene glycol, and a specific saponified product of ethylene-vinyl acetate copolymer, and a laminated film having an intermediate layer made of the above composition, are effective (Japanese Patent No. 2517516). In the above invention, because polyvinyl alcohol alone provides a good barrier to oxygen gas but has a low ratio of carbon dioxide gas transmission rate to oxygen gas transmission rate, as well as low melt-extrusion workability, polyalkylene glycol is added thereto to make it plastic, thereby improving the ratio of carbon dioxide gas transmission rate to oxygen gas transmission rate, as well as melt-extrusion workability, while reducing impermeability to oxygen gas. Further, by adding thereto saponified product of ethylene-vinyl acetate copolymer, both impermeability to oxygen gas and melt-extrusion workability are improved.

In addition, JP-A-7-179709, the inventors disclose that a composition, which is composed of 40-80% by weight of a polyvinyl alcohol, 5-40% by weight of a saponified product of ethylene-vinyl acetate copolymer, 5-15% by weight of a polyethylene glycol, and 1-15% by weight of a thermoplastic resin having a softening temperature of 130°C or lower, exhibits selective gas permeability. However, this selectively gas permeable film has a problem in that the permeability of oxygen gas is high.

The present invention provides a selectively gas permeable film, which has relatively low permeability of oxygen gas and has a high ratio of carbon dioxide gas transmission rate to oxygen gas transmission rate, and a packing film for foods using the same.

The present invention is based on the finding that when a saponified product of ethylene-vinyl acetate copolymer is the main component in a composition, the permeability of oxygen gas is relatively low, and the ratio of carbon dioxide gas transmission rate to oxygen gas transmission rate is high.

In brief, the gist of the present invention resides in a selectively gas permeable film composed of a composition comprising: (1) 50-98% by weight of a saponified product of ethylene-vinyl acetate copolymer, wherein the ethylene content is 20-50 mol.% and the saponification value of vinyl acetate component is 96 mol.% or higher; (2) 0-45% by weight of polyvinyl alcohol having a saponification value of 60-95 mol.%; and (3) 0.1% or higher by weight of at least one species having an average molecular weight of 4,000 or lower selected from monomers, oligomers, and polymers of either one of alkylene glycol or hydroxy acid, wherein the content of said at least one species does not exceed its saturation solubility for the sum of the copolymer of ethylene-vinyl acetate and the polyvinyl alcohol. The present invention will be explained in detail below.

The resin composition of the present invention has structures wherein (1) the saponified product of ethylene-vinyl acetate copolymer has a matrix structure; (2) the polyvinyl alcohol can be omitted, but when contained, the polyvinyl alcohol is dispersed; and (3) at least one species selected from monomers, oligomers, and polymers of either one of alkylene glycol or hydroxy acid may coexist with both of or either one of components (1) and (2), normally with the saponified product of ethylene-vinyl acetate copolymer. Because component (3), i.e., monomers, oligomers, and polymers of either one of alkylene glycol or hydroxy acid, can be dissolved in both (1) the saponified product of ethylene-vinyl acetate copolymer and (2) the polyvinyl alcohol, component (3) exudes and migrates from either one of component (1) or (2) to the other with time, regardless of which component component (3) is contained in. Accordingly, the compositions of a matrix (continuous phase) and particles (dispersing elements) might be changed, but after a given time elapses after formation, the compositions will be in a stable state.

The first component of the composition of the present invention is a saponified product of ethylene-vinyl acetate copolymer, which is used as the main component in the composition and is contained in the range of 50-98% by weight.

When the content is less than 50% by weight, a matrix cannot be formed, thereby increasing permeability of oxygen gas. On the other hand, when the content is more than 98% by weight, the ratio of carbon dioxide gas transmission rate to oxygen gas transmission rate decreases. Thus, the saponified product of ethylene-vinyl acetate copolymer is used preferably in an amount of 55-94% by weight, more preferably 57-90% by weight.

When the ethylene content in the saponified product of ethylene-vinyl acetate copolymer is high, saturation solubility of at least one species selected from monomers, oligomers, and polymers of either of alkylene glycol or hydroxy acid to the saponified product of ethylene-vinyl acetate copolymer increases, thereby increasing the ratio of carbon dioxide gas transmission rate to oxygen gas transmission rate. However, it becomes difficult for the saponified product of ethylene-vinyl acetate copolymer to maintain low permeability of oxygen gas. When the ethylene content is low, each relationship described above is reversed. On the other hand, when the saponification value of the vinyl acetate component is low, permeability of oxygen gas increases. Thus, the ethylene content in the saponified product of ethylene-vinyl acetate copolymer is preferably 20-50 mol.%, more preferably 20-45 mol.%, and the saponification value of the vinyl acetate component is 96 mol.% or higher, preferably 98 mol.% or higher.

The second component is a polyvinyl alcohol, which is used in an amount of 45% or less by weight. When the saponification value thereof decreases, permeability of oxygen gas of the resulting film increases. On the other hand, when the saponification value thereof increases, saturation solubility of monomers, oligomers, and polymers of either one of alkylene glycol or hydroxy acid to the saponified product of ethylene-vinyl acetate copolymer drastically decreases, thereby relatively decreasing permeability of oxygen gas, and further decreasing the ratio of carbon dioxide gas transmission rate to oxygen gas transmission rate. Further, the differences between the melting point and the temperature of thermoforming, i.e., the temperature range permitting thermal molding, is narrowed, and especially when the saponification value is higher than 95 mol.%, it becomes difficult to perform thermoforming. Thus, the saponification value of polyvinyl alcohol is 60-95 mol.%, preferably 60-90 mol.%, more preferably 60-80 mol.%.

In addition, the average degree of polymerization of polyvinyl alcohol, as measured based on JIS-K6726, is preferably 300 or higher with respect to strength, and 3,500 or lower with respect to formability, more preferably 400-3,000, particularly preferably 500-2,000.

Polyvinyl alcohol, the second component of the composition of the present invention, may not be indispensable. However, when polyvinyl alcohol is present in a certain amount, the content of the first component, saponified product of ethylene-vinyl acetate copolymer, is relatively decreased, thereby increasing the ratio of carbon dioxide gas transmission rate to oxygen gas transmission rate. On the other hand, when polyvinyl alcohol is used excessively, a matrix is formed by polyvinyl alcohol, thereby making it impossible to maintain low permeability of oxygen gas. Thus, polyvinyl alcohol is used in an amount of 0-45% by weight, more preferably 5-40% by weight.

One component included in the third component is alkylene glycol such as ethylene glycol, propylene glycol, 1,2-butanediol, 1,3-butanediol, 1,4-butanediol, and 2,3-butanediol. Among these, 1,2-butanediol and 1,4-butanediol are preferable Alkylene glycol can be a monomer, oligomer, or polymer, and may be typified by polyethylene glycol. The average molecular weight is preferably 400 or higher. The upper limit of the average molecular weight of polyalkylen glycol is 4,000; however, approximately 2,000 or less, more preferably 500-1,000, is preferable in view of a high ratio of carbon dioxide gas transmission rate to oxygen gas transmission rate.

The other component included in the third component is at least one species selected from a monomer, oligomer, or polymer of hydroxy acid such as a monomer, oligomer, or polymer of lactic acid or lactic acid ester. The above at least one species has an average molecular weight of 4,000 or lower, preferably 2,000 or lower. Among these, a monomer of lactic acid is preferable.

When at least one species selected from the group consisting of monomers, oligomers, and polymers of alkylene glycol or hydroxy acid is used in an insufficient amount in the composition, permeability of carbon dioxide gas deteriorates, and the ratio of carbon dioxide gas transmission rate to oxygen gas transmission rate becomes low. In particular, when the polyvinyl alcohol content is low, extrusion formation cannot be performed due to the occurrence of thermal decomposition during molding. On the other hand, when the species is excessive, loss during molding increases, and bleed-out also increases. Thus, at least one species selected from the group consisting of monomers, oligomers, and polymers of alkylene glycol or hydroxy acid is used in an amount 0.1% or higher by weight, but in an amount not exceeding its saturation solubility for the sum of the content of the first component (the saponified product of ethylene-vinyl acetate copolymer) and the content of the second component (the polyvinyl alcohol), preferably in the range of from 2% or higher by weight, more preferably 4% or higher by weight, to the above saturation solubility. The saturation solubility is different depending on the content of each of the saponified product of ethylene-vinyl acetate copolymer and the polyvinyl alcohol in the composition, also depending on the mixing ratio of the saponified product of ethylene-vinyl acetate copolymer to the polyvinyl alcohol. However, when the saponified product of ethylene-vinyl acetate copolymer and the polyvinyl alcohol are present in equal amounts, the saturation solubility is around 15% by weight.

The above saturation solubility can be determined as follows: When polyvinyl alcohol is in the form of pellets, the pellets are pulverized, and mixed with powdered saponified product of ethylene-vinyl acetate copolymer to prepare a powder mixture. To the powder mixture, at least one species selected from monomers, oligomers, and polymers of alkylene glycol or hydroxy acid is added in an amount of its assumed saturation solubility, followed by allowing the resulting mixture to stand at an appropriate temperature for 24 hours in order to impregnate the at least one species selected from monomers, oligomers, and polymers into the mixture. In the above, the appropriate temperature is as follows: When one species selected from monomers, oligomers, and polymers of alkylene glycol or hydroxy acid is used, the appropriate temperature is room temperature if the species is liquid at room temperature; one the other hand, the appropriate temperature is a temperature 30°C higher than the softening temperature of the species if the species is solid at room temperature; and when a mixture of more than one species is used, the appropriate temperature is a temperature determined in the above manner when a single species having the highest softening temperature among the more than one species is used singly. The impregnated mixture undergoes thermoforming using a heat press for two minutes at 200°C under 100 Kgf/cm$_2$ to produce a pressed sheet while immediately wiping exuding material from the sheet. Based on the weight of the pressed sheet, the saturation solubility of the monomers, oligomers, or polymers of alkylene glycol or hydroxy acid is calculated.

The composition of the present invention may contain conventional stabilizers, adhesion-preventing agents, lubricants, coloring agents, filler, etc., in addition to the first component (the saponified product of ethylene-vinyl acetate copolymer), the second component (the polyvinyl alcohol), and the third component (at least one species selected from the group consisting of monomers, oligomers, and polymers of either one of alkylene glycol or hydroxy acid).

A method of preparing the composition of the present invention is not limited. Normally, however, when at least one species selected from the group consisting of monomers, oligomers, and polymers of either one of alkylene glycol or hydroxy acid is contained in an amount less than its saturation solubility to either ethylene-vinyl acetate copolymer or polyvinyl alcohol, the species is added to and dissolved in one of or both of the polymers (ethylene-vinyl acetate copolymer and polyvinyl alcohol). When the amount of the species exceeds the saturation solubility for both polymers, the species is added to each polymer separately in such a way that the species is dissolved in each polymer in an amount not more than its saturation solubility to each polymer. In particular, when alkylene glycol or hydroxy acid is a polymer having a high molecular weight, the polymer is solid, and thus, a preferred method is that the polymer is dry-blended with polyvinyl alcohol powder or pellets of saponified product of ethylene-vinyl acetate copolymer at a temperature of 100-120°C, and is fed into an extruder from a hopper to melt-knead the mixture, followed by shaping it in the form of a pellet. When at least one species selected from the group consisting of monomers oligomers, and polymers of either one of alkylene glycol or hydroxy alkylene glycol or hydroxy acid is liquid, a preferred method is that polyvinyl alcohol powder or pellets of saponified product of ethylene-vinyl acetate copolymer are fed into an extruder from a hopper, and the liquid of at least one species selected from the group consisting of monomers, oligomers, and polymers of either one of alkylene glycol or hydroxy acid is introduced into the extruder from a position somewhere between the inlet and the outlet to melt-knead the mixture, followed by shaping it in the form of a pellet.

In either case, the thus-obtained pellets are formed into a film, a sheet, etc., and used alone or in combination with other films to laminate the films. The film itself can be either non-stretched or stretched.

Molding of a film comprising the composition of the present invention may be performed by a laminate method, a co-extrusion lamination method, a co-extrusion inflation method, etc. Further, stretch of a film can normally be performed by a uniaxial stretching or a biaxial stretching such as those by an inflation method, a stentering method, etc. The stretching temperature is 85-95°C, and the degree of stretching is usually 200-400% in both lengthwise and lateral directions. As a heating method during extension, a hot water bath system or dry heat system may be employed.

A single-layer or laminated-layer film comprising the present composition has a high ratio of carbon dioxide gas transmission rate to oxygen gas transmission rate, and can be effectively used for packaging foods generating carbon dioxide gas, such as perishable food (e.g., fruit), cheese, garlic, kimchi, chinese yam, etc. In packaging cheese, the film can be used for each step including the aging step and distribution step.

The film comprising the present composition has low permeability of carbon dioxide gas if water is present to a certain degree. That is, in the film comprising the present composition, when the equilibrium water absorption ratio (described below) is less than 5% by weight, permeability of carbon dioxide gas decreases, i.e., insufficient permeability of carbon dioxide gas. The above-described equilibrium water absorption ratio is a percentage of the weight of water absorbed by the film per the weight of the film in a dry state. The equilibrium water absorption ratio of less than 5% by weight may be achieved when relative humidity of the air outside is as low as 20%, for example.

When the film comprising the present composition is used as a packaging film for packaging a subject containing water such as water-containing foods, as long as water is present, the equilibrium water absorption ratio of the film comprising the present composition results inherently in 5% by weight or higher. Thus, even when the film is of a single-layer, permeability of carbon dioxide gas is high as compared with permeability of oxygen gas. The film comprising the present composition can be used in either a single-layer structure or a laminated-layer structure if the film is not in direct contact with water, as above. However, water-retention capacity of the film is insufficient, and thus, it is not appropriate to use solely the film in direct contact with a water-containing subject. Thus, when the film is used in contact with water, by constructing a laminated structure using a resin film having low transmission of water for an inner layer (inside facing), i.e., a layer in contact with water, sufficient water-retention capacity can be achieved for a long period of time. The laminated structure may be a double- or multiple-layer structure.

In particular, when a laminated structure is employed, the film comprising the composition of the present invention is used as an intermediate layer. A laminated film having an outer layer having a water vapor transmission ($W_0$) (at 40°C and 90% humidity) indicated below, and an inner layer having a water vapor transmission ($W_1$) (at 40°C and 90% humidity) indicated below, are preferably used for packing water-containing foods.

$$W_0 < 50 g{\ast}m^{-2}{\ast}24hr^{-1}$$

$$W_0 \leq W_1$$

They are more preferable as follows:

$$W_0 < 45 g{\ast}m^{-2}{\ast}24hr^{-1}$$

$$W_0 \leq W_1/2$$

They are further preferable as follows:

$$W_0 < 40 g{\ast}m^{-2}{\ast}24hr^{-1}$$

$$W_0 \leq W_1/3$$

By using the outer layer and the inner layer as described above, the equilibrium water absorption ratio of the intermediate layer can remain constant for a long period of time, regardless of the relative humidity of the air outside. That is, permeability of carbon dioxide gas of the intermediate layer can be maintained with little influence from fluctuation of the relative humidity of the air outside. In addition, when it is necessary to have as low permeability of oxygen gas as possible, increasing the thickness of the intermediate layer is effective.

Further, layers constituting a laminated film, other than the above, may preferably include at least one reinforcing layer selected from paper, porous polyamide layers, porous polyester layers, and porous polypropylene layers. In the above, the oxygen gas transmission rate of the reinforcing layer is preferably 10,000 $cc/m^2{\ast}day{\ast}atm$ or higher.

As for a thermoplastic resin constituting the above outer layer and the inner layer, olefine-based resin may be used, for example. In particular, the resin includes low-density polyethylene (LDPE), high-density polyethylene (HDPE), VLDPE, ethylene-$\alpha$-olefine copolymer using a single-site catalyst, syndiotactic polypropylene copolymer using a single-site catalyst, ethylene-propylene copolymer (EPC), polypropylene (PP), polystyrene (PS), ethylene-vinyl acetate copolymer (EVA), poly-4-methylpentene-1(TPX), ionomer (IO), ethylene-acrylate base copolymer, ethylene-methacrylate base copolymer, and acid-modified product (graft copolymer) of the foregoing.

When used, normally, one resin or a resin composition comprising two or more of the above resins, or a processing auxiliary in addition to the above, can be employed.

In an embodiment using thermoplastic resin, the outer layer and the inner layer may be made of the same resin or different resins. When the outer layer and the inner layer are constituted by the same thermoplastic resin, LDPE, VLDPE, PP, EVA,EPC, ethylene-$\alpha$-olefine copolymer using a single-site catalyst, TPX, PS, etc. may be suitable. In the above, the thickness of the intermediate layer is normally not more than 1/2 of the outer layer, preferably 1/3 or less.

In addition, as for the inner layer, resin having heat-sealability can be used.

A particular combination of the outer layer and the inner layer includes, in order of the outer layer to the inner layer, LDPE and EVA, PP and EVA, LLDPE and VLDPE, IO and EVA, PP and LDPE, IO and LDPE, PP and TPX, PP and PS, PP and IO, HDPE and EVA, IO and TPX, IO and PS, LDPE and TPX, LDPE and PS, HDPE and TPX, HDPE and PS, LLDPE and TPX, EVA and PS, EVA and TPX, TPX and PS, LLDPE and PS, VLDPE and EVA, VLDPE and TPX, VLDPE AD PS, etc.

Each of the outer layer and the inner layer itself can be a single layer or a laminated layer comprising a plurality of layers.

In any case, the thickness of the outer layer is such that the water vapor transmission rate ($W_0$) of the outer layer is $50 g{\ast}m^{-2}{\ast}24hr^{-1}$ or lower (at 40°C and 90% humidity), preferably $45 g{\ast}m^{-2}{\ast}24hr^{-1}$ or lower (ditto). The thickness of the outer layer is preferably 10$\mu$m or greater. On the other hand, because the carbon dioxide gas transmission rate decreases when the outer layer and/or the inner layer are/is thick, the thickness of the outer layer is selected from the range of normally 10-60$\mu$m, preferably 10-50$\mu$m.

The thickness of the inner layer is selected from the range of preferably 5-50$\mu$m, more preferably 10-50$\mu$m.

In particular, when the outer layer and the inner layer are made of the same resin, the thickness of the inner layer is preferably not more than 1/2 of the thickness of the outer layer, more preferably 1/3 or less.

The adhesion between the intermediate layer and the outer layer, and between the intermediate layer and the inner layer, may be direct adhesion; however, an adhesive resin layer can be interposed therebetween. The adhesive resin includes thermoplastic resin containing carboxyl group or its derivative, e.g., polyolefin graft-modified by maleic acid, fumaric acid, or the like, and further, adipic acid base polyester containing carboxyl group having a urethane bond, etc.

EXAMPLE

In the following examples, the oxygen gas transmission rate and carbon dioxide gas transmission rate were measured as follows:

(1) Oxygen Gas Transmission Rate

The oxygen gas transmission rate was measured at 23°C and 80% humidity, using an oxygen gas transmission rate measuring apparatus (OX-TRAN 2/20, manufactured by Modern Control Co.).
In the tables, no units are indicated. However all of them are "$cm^3*m^{-2}*24hr^{-1}*atm^{-1}$".

(2) Carbon dioxide Gas Transmission rate

The carbon dioxide gas transmission rate was measured at 23°C and 80% humidity, using a carbon dioxide gas transmission rate measuring apparatus (PERMATRAN C-IV, manufactured by Modern Control Co.).
In the tables, no units are indicated. However, all of them are "$cm^3*m^{-2}*24hr^{-1}*atm^{-1}$".

(3) Water vapor Transmission Rate (indicated as "WVTR" in the tables below)

The water vapor transmission rate was measured at 40°C and 90% humidity, using a water vapor transmission rate measuring apparatus (L80-4000, manufactured by LYSSY Co.).
In the tables, no units are indicated. However, all of them are "$g*m^{-2}*24hr^{-1}$".

(4) Equilibrium Water Absorption Ratio

A bag having a width of sealed portion of 5 mm, a lengthwise inner length of 150 mm, and a lateral inner length of 100 mm, was made using a laminated film to be analyzed. The sealed bag contained 50 cc distilled water inside in order to maintain an inside humidity of 100%. The bag was placed in a box whose relative humidity was controlled at 20%, 31%, 50%, 65%, 75%, 82%, 90%, or 98%, for ten days. The distilled water accommodated inside was then taken out, and any water drops present on the surface of the bag were wiped with tissue. The weight of the bag (A) was measured. The bag was then dried at 105°C for one hour, and the weight of the dried bag (B) was measured. The equilibrium water absorption ratio (a) of the laminated bag was calculated based on the difference in the weight before and after drying {(A)-(B)} and the weight after drying (B).

$$\text{Equilibrium water absorption ratio (a)} = \{(A)-(B)\}*100/(B) \qquad \text{Equation 1}$$

Independently of the above, the outer layer, the inner layer, and the intermediate layer of the laminated film were separated, and each was cut into a piece, the size of 300mm x 300mm. The piece was placed in a box whose relative humidity was controlled at 20% or 90%, for ten days. The weight of the piece was then measured.
After the piece was dried at 105°C for one hour, the weight was measured. The equilibrium water absorption ratio of the outer layer (equilibrium water absorption ratio of the outer layer ($b_{20}$, $b_{90}$) or the inner layer (equilibrium water absorption ratio of the inner layer ($c_{20}$, $c_{90}$) at relative humidities of 20% and 90% was calculated using equation 1 based on the difference in the weight before and after drying.
The thus-obtained two values of equilibrium water absorption ratio of the outer layer or the inner layer were averaged to obtain equilibrium water absorption ratio of the outer layer (b) or equilibrium water absorption ratio of the inner layer (c).
The equilibrium water absorption ratio of the intermediate layer (d) at each relative humidity was calculated as follows:

$$(d)=(a)-\{(b)+(c)\}$$

EXAMPLE 1

Pellets of saponified product of ethylene-vinyl acetate copolymer (hereinafter referred to as "EVOH") were fed into a biaxial extruder through its hopper, and polyethylene glycol having a molecular weight of 600 (liquid; manufactured by Sanyo Seika, KK; polyethylene glycol is hereinafter referred to as "PEG") was fed into the biaxial extruder from its middle section, wherein they were melt-kneaded, thereby obtaining composition pellets (A). In the above, EVOH had an ethylene content of 32 mol.%, and a saponification value of 99% (Soanol DC3212, manufactured by Nippon Gosei Kagaku Kogyo, KK).

In the composition, EVOH was 92% by weight, and PEG was 8% by weight.

In the meantime, 82% by weight of polyvinyl alcohol (hereinafter referred to as "PVA") having a saponification value of 80%, and 18% by weight of PEG were blended in a Henschel mixer while raising the temperature from room temperature to 120°C. The blended mixture then underwent melt-formation using an extruder, thereby obtaining pellets (B). PVA was "PVA P405" having an average degree of polymerization of 500, manufactured by Kurare, KK, and PEG was the same as above.

60% by weight of the pellets (A) and 40% by weight of the pellets (B) were mixed, and underwent melt-formation using an extruder having a diameter of 40 mm with a T-die, thereby obtaining a film having a thickness of 40μm. The various characteristics of the thus-obtained film were evaluated. Table 1 shows the results together with the main constituent resin.

EXAMPLE 2

Example 2 was conducted in the same manner as in Example 1, except that the weight ratio of PVA to PEG in the pellets (B) was changed from 82:18 to 93:7.

Table 1 shows the results together with the main constituent resin.

EXAMPLE 3

Example 3 was conducted in the same mariner as in Example 1, except that the weight ratio of EVOH to PEG in the pellets (A) was changed from 92:8 to 95:5, and that the weight ratio of PVA to PEG in the pellets (B) was changed from 82:18 to 87.5:12.5.

Table 1 shows the results together with the main constituent resin.

EXAMPLE 4

An intermediate layer was made of the same composition as in Example 3, an outer layer was made of low-density polyethylene (Sumikasen F200, manufactured by Sumitomo Kagaku Kogyo, KK), an inner layer was made of ethylene-vinyl acetate copolymer resin (NUC8425, manufactured by Nippon Unika, KK), and an adhesion layer was made of acid-modified graft polyolefin (Admer SF740, manufactured by Mitsui Petro Chemical Co., Ltd.). The above materials underwent melt-formation using a circular die co-extrusion apparatus at a resin temperature of 200°C, having the layer structure: outer layer - adhesion layer - intermediate layer - adhesion layer - inner layer, in order.

After extruding the materials from the die, a laminated film was formed using a conventional direct inflation method. The thickness of each of the outer layer - the adhesion layer - the intermediate layer - the adhesion layer - the inner layer was 38 - 2 - 4 - 2 - 20 μm in order.

Table 1 shows the results together with the main constituent resin. Table 2 shows humidity-dependency of the film.

EXAMPLE 5

Example 5 was conducted in the same manner as in Example 1, except that the weight ratio of EVOH to PEG in the pellets (A) was changed from 92:8 to 100:0, and that the weight ratio of PVA to PEG in the pellets (B) was changed from 82:18 to 93:7.

Table 1 shows the results together with the main constituent resin.

EXAMPLE 6

Example 6 was conducted in the same manner as in Example 1, except that the weight ratio of EVOH to PEG in the pellets (A) was changed from 92:8 to 95:5, that the weight ratio of PVA to PEG in the pellets (B) was changed from 82:18 to 60:40, and that the weight ratio of the pellets (A) to the pellets (B) was changed from 60:40 to 75:25.

Table 1 shows the results together with the main constituent resin.

EXAMPLE 7

Example 7 was conducted in the same manner as in Example 1, except that the weight ratio of EVOH to PEG in the pellets (A) was changed from 92:8 to 95:5, that the weight ratio of PVA to PEG in the pellets (B) was changed from 82:18 to 87.5:12.5, and that the weight ratio of the pellets (A) to the pellets (B) was changed from 60:40 to 75:25.
Table 1 shows the results together with the main constituent resin.

EXAMPLE 8

Example 8 was conducted in the same manner as in Example 1, except that the weight ratio of EVOH to PEG in the pellets (A) was changed from 92:8 to 95:5, that the weight ratio of PVA to PEG in the pellets (B) was changed from 82:18 to 80:20, and that the weight ratio of the pellets (A) to the pellets (B) was changed from 60:40 to 75:25.
Table 1 shows the results together with the main constituent resin.

EXAMPLE 9

Example 9 was conducted in the same manner as in Example 1, except that the weight ratio of EVOH to PEG in the pellets (A) was changed from 92:8 to 95:5, that the weight ratio of PVA to PEG in the pellets (B) was changed from 82:18 to 90:10, and that the weight ratio of the pellets (A) to the pellets (B) was changed from 60:40 to 75:25.
Table 1 shows the results together with the main constituent resin.

EXAMPLE 10

Example 10 was conducted in the same manner as in Example 4, except that the intermediate layer was made of the same composition as in Example 7, and the outer layer was made of ionomer (lotec 31, manufactured by Exon).
Table 1 shows parts of the results together with the main constituent resin. Table 3 shows humidity-dependency of the film.

EXAMPLE 11

Example 11 was conducted in the same manner as in Example 1, except that the weight ratio of EVOH to PEG in the pellets (A) was changed from 92:8 to 95:5, that the weight ratio of PVA to PEG in the pellets (B) was changed from 82:18 to 87.5:12.5, and that the weight ratio of the pellets (A) to the pellets (B) was changed from 60:40 to 80:20.
Table 1 shows the results together with the main constituent resin.

EXAMPLE 12

Example 12 was conducted in the same manner as in Example 1, except that the weight ratio of EVOH to PEG in the pellets (A) was changed from 92:8 to 98:2, that the weight ratio of PVA to PEG in the pellets (B) was changed from 82:18 to 87.5:12.5, and that the weight ratio of the pellets (A) to the pellets (B) was changed from 60:40 to 80:20.
Table 1 shows the results together with the main constituent resin.

EXAMPLE 13

Example 13 was conducted in the same manner as in Example 1, except that the weight ratio of EVOH to PEG in the pellets (A) was changed from 92:8 to 100:0, that the weight ratio of PVA to PEG in the pellets (B) was changed from 82:18 to 87.5:12.5, and that the weight ratio of the pellets (A) to the pellets (B) was changed from 60:40 to 80:20.
Table 1 shows the results together with the main constituent resin.

EXAMPLE 14

Example 14 was conducted in the same manner as in Example 1, except that the weight ratio of EVOH to PEG in the pellets (A) was changed from 92:8 to 95:5, that the weight ratio of PVA to PEG in the pellets (B) was changed from 82:18 to 87.5:12.5, and that the weight ratio of the pellets (A) to the pellets (B) was changed from 60:40 to 90:10.
Table 1 shows the results together with the main constituent resin.

8

EXAMPLE 15

Example 15 was conducted in the same manner as in Example 1, except that the weight ratio of EVOH to PEG in the pellets (A) was changed from 92:8 to 100:0, and that the weight ratio of the pellets (A) to the pellets (B) was changed from 60:40 to 97:3.

Table 1 shows the results together with the main constituent resin.

EXAMPLE 16

Example 16 was conducted in the same manner as in Example 1, except that the weight ratio of EVOH to PEG in the pellets (A) was changed from 92:8 to 98:2, ad that the weight ratio of the pellets (A) to the pellets (B) was changed from 60:40 to 100:0.

Table 1 shows the results together with the main constituent resin.

EXAMPLE 17

Example 17 was conducted in the same manner as in Example 11, except that PVA was replaced with "Gohsenol KM-11" having an average degree of polymerization of 1,100 (manufactured by Nippon Gosei Kagaku Kogyo, KK).

Table 1 shows the results together with the main constituent resin.

EXAMPLE 18

Example 18 was conducted in the same manner as in Example 11, except that EVOH was replaced with a saponified product of ethylene-vinyl acetate copolymer having an ethylene content of 29 mol.%, and a saponification value of 99 mol.% (Soanol D2908, manufactured by Nippon Gosei Kagaku Kogyo, KK).

Table 1 shows the results together with the main constituent resin.

EXAMPLE 19

Example 19 was conducted in the same manner as in Example 11, except that EVOH was replaced with a saponified product of ethylene-vinyl acetate copolymer having an ethylene content of 38 mol.%, and a saponification value of 99 mol.% (Soanol D3808, manufactured by Nippon Gosei Kagaku Kogyo, KK).

Table 1 shows the results together with the main constituent resin.

EXAMPLE 20

Example 20 was conducted in the same manner as in Example 19, except that PEG was replaced with an ethylene glycol monomer.

Table 1 shows the results together with the main constituent resin.

COMPARATIVE EXAMPLE 1

Comparative Example 1 was conducted in the same manner as in Example 1, except that the film was made of an EVOH single layer.

Table 1 shows the results together with the main constituent resin.

COMPARATIVE EXAMPLE 2

Comparative Example 2 was conducted in the same manner as in Example 1, except that the weight ratio of EVOH to PEG in the pellets (A) was changed from 92:8 to 88:12, and that the weight ratio of the pellets (A) to the pellets (B) was changed from 60:40 to 0:100.

Table 1 shows the results together with the main constituent resin.

COMPARATIVE EXAMPLE 3

Comparative Example 3 was conducted in the same manner as in Example 1, except that the weight ratio of EVOH to PEG in the pellets (A) was changed from 92:8 to 100:0, that the weight ratio of PVA to PEG in the pellets (B) was changed from 82:18 to 98:2, and that the weight ratio of the pellets (A) to the pellets (B) was changed from 60:40 to 97:3.

Table 1 shows the results together with the main constituent resin.

EXAMPLE 21

Pellets were obtained by melt-kneading 100 parts by weight of a saponified product of ethylene-vinyl acetate copolymer and 5 parts by weight of polyethylene glycol, using a biaxial extruder. The saponified product of ethylene-vinyl acetate copolymer was a product manufactured by Nippon Gosei Kagaku, KK under the product name "Soanol D2908 (having an ethylene content of 29 mol.%, a saponification value of 99.4 mol.%, a melting point of 188°C, a melt viscosity of $1.0 \times 10^4$ poise at 210°C and at a shear rate of $10^2$ sec$^{-1}$), and the polyethylene glycol was a product manufactured by Sanyo Kasei, KK having an average molecular weight of 600.

An intermediate layer was made of the above pellets of the blended materials, an inner layer was made of ethylene-vinyl acetate copolymer resin (indicated as "EVA" in the tables), and an adhesion layer was made of acid-modified graft polyolefin. The above materials underwent melt-formation using a circular die co-extrusion apparatus at a resin temperature of 200°C. The ionomer was "Iotech 3110" (product name) manufactured by Exon, KK (the water vapor transmission rate was 28.4 g*m$^{-2}$*24hr$^{-1}$ at 40°C and relative humidity 90% when the thickness was 20μm). The ethylene-vinyl acetate copolymer was "NUC8425" (product name) manufactured by Nippon Unika, KK (the water vapor transmission rate was 72.4 g*m$^{-2}$*24hr$^{-1}$ at 40°C and relative humidity 90% when the thickness was 20μm).

The acid-modified graft polyolefin was "Admer SF740" (product name) manufactured by Mitsui Petro Chemical Co., Ltd. (a MI of 5.6 at 190°C).

After rapid parison cooling of the thus-obtained product, the product was heated in a hot water bath (94°C) for ten seconds, and immediately thereafter, a film was formed by inflation, wherein the stretch ratio in lengthwise and lateral directions was 2.5 x 2.5. The laminated stretched film was composed of five layers each having a thickness indicated in Table 4. The various characteristics were evaluated, and the results are indicated in Table 4.

COMPARATIVE EXAMPLE 4

Comparative Example 4 was conducted in the same manner as in Example 21, except that the intermediate layer was made of the ionomer of Example 21, the outer layer was made of ethylene-vinyl acetate copolymer, and the thickness of the outer layer was 15μm.

The results are shown in Table 4.

EXAMPLE 22

Example 22 was conducted in the same manner as in Example 21, except that the saponified product of ethylene-vinyl acetate copolymer was replaced with "Soanol DC3212" (product name) manufactured by Nippon Gosei Kagaku Kogyo, KK (having ethylene content of 32 mol.%, saponification value of 99.4 mol.%, melting point of 183°C, melt-viscosity of $1.0 \times 10^4$ poise (at 210°C and at a shear rate of $10^2$ sec$^{-1}$).

The results are shown in Table 5.

COMPARATIVE EXAMPLE 5

Comparative Example 5 was conducted in the same manner as in Example 22, except that the outer layer having a thickness of 15μm was made of EVA used in the inner layer in Example 22, and the inner layer was made of the ionomer used in the outer layer in Example 22.

The results are shown in Table 5.

EXAMPLE 23

Example 23 was conducted in the same manner as in Example 21, except that the ionomer constituting the outer layer in Example 21 was replaced with low-density polyethylene, the thickness of the layer was 38μm, and the film was formed without stretch.

The low-density polyethylene was "Sumikasen F200" (product name) manufactured by Sumitomo Kagaku Kogyo, KK (the water vapor transmission was 33.8 g*m$^{-2}$*24hr$^{-1}$ at 40°C and relative humidity 90% when the thickness was 20μm).

The results are shown in Table 6.

COMPARATIVE EXAMPLE 6

Comparative Example 6 was conducted in the same manner as in Example 23, except that the outer layer was made of the low-density polyethylene used in the inner layer in Example 23, and the inner layer was made of EVA used in the outer layer in Example 23.

The results are shown in Table 6.

EXAMPLE 24

Example 24 was conducted in the same manner as in Example 23, except that the intermediate layer was made of the same composition as in Example 22.

The results are shown in Table 7.

COMPARATIVE EXAMPLE 7

Comparative Example 7 was conducted in the same manner as in Example 24, except that the inner layer was made of the low-density polyethylene used in the outer layer in Example 24, and the outer layer was made of EVA used in the inner layer in Example 24.

The results are shown in Table 7.

COMPARATIVE EXAMPLE 8

The intermediate layer and the inner layer were made of the same compositions as in Example 21, wherein the thickness of the inner layer was 30μm. The outer layer was made of the same EVA as in the inner layer, wherein the thickness of the outer layer was 20μm. The other conditions such as the conditions of formation were the same as in Example 23, thereby obtaining a non-stretched laminated film.

The results are shown in Table 8.

COMPARATIVE EXAMPLE 9

The intermediate layer was the same resin as in Example 21. The inner layer and the outer layer were made of low-density polyethylene. The adhesion layer was made of acid-modified graft polyolefin. The low-density polyethylene was "Sumikasen L708" (product name) manufactured by Sumitomo Kagaku Kogyo, KK (having a MI of 10, a density of 0.918 g/cm$^3$). The acid-modified graft polyolefin was "Admer SF750" (product name) manufactured by Mitsui Petro Chemical Co., Ltd. (having a MI of 4.7). The constituent resins of the respective layer were melt-kneaded using respective extruders, and then underwent melt-formation using a T-die co-extrusion apparatus at a resin temperature of 200°C. The thicknesses of the outer layer, the adhesion layer, the intermediate layer, the adhesion layer, and the inner layer were 20μm, 5μm, 19μm, 5μm, and 17μm, respectively.

The results are shown in Table 8.

The selectively gas permeable film of the present invention has relatively low oxygen gas permeability, and a significantly high ratio of carbon dioxide gas transmission rate to oxygen gas transmission rate. Thus, the film is very useful, in the form of a single-layer film or a laminated-layer film, for packaging water-containing foods, especially fermented foods, such as cheese and kimchi, which generate carbon dioxide gas.

Table 1

| | | Composition | | | EVCH | PVA | PEG | | Film Struct. | $O_2$ (4) | $CO_2$ (5) | $CO_2/O_2$ (6) |
|---|---|---|---|---|---|---|---|---|---|---|---|---|
| | | EVOH | PVA | PEG | (1) | (2) | | (3) | | | | |
| (7) | 1 | 55.2 | 32.8 | 12 | 32 | 500 | polymer | 15.6 | single | 9 | 117 | 13 |
| | 2 | 55.2 | 37.2 | 7.6 | 32 | 500 | polymer | 15.6 | single | 7 | 90 | 13 |
| | 3 | 57 | 35 | 8 | 32 | 500 | polymer | 15.6 | single | 7 | 83 | 13 |
| | 4 | 57 | 35 | 8 | 32 | 500 | polymer | 15.6 | laminate | 50 | 550 | 11 |
| | 5 | 60 | 37.2 | 2.8 | 32 | 500 | polymer | 15.6 | single | 7 | 68 | 10 |
| | 6 | 71.25 | 21.43 | 7.32 | 32 | 500 | polymer | 12.75 | single | 7 | 91 | 13 |
| | 7 | 71.25 | 21.88 | 6.87 | 32 | 500 | polymer | 12.75 | single | 7 | 80 | 11 |
| | 8 | 71.25 | 22.22 | 6.53 | 32 | 500 | polymer | 12.75 | single | 7 | 82 | 12 |
| | 9 | 71.25 | 22.5 | 6.25 | 32 | 500 | polymer | 12.75 | single | 7 | 84 | 12 |
| | 10 | 71.25 | 21.88 | 6.87 | 32 | 500 | polymer | 12.75 | laminate | 40 | 410 | 10 |
| | 11 | 76 | 17.5 | 6.5 | 32 | 500 | polymer | 11.8 | single | 7 | 84 | 12 |
| | 12 | 78.4 | 17.5 | 4.1 | 32 | 500 | polymer | 11.8 | single | 6 | 66 | 11 |
| | 13 | 80 | 17.5 | 2.5 | 32 | 500 | polymer | 11.8 | single | 4 | 40 | 10 |
| | 14 | 85.5 | 8.75 | 5.75 | 32 | 500 | polymer | 9.9 | single | 7 | 77 | 11 |
| | 15 | 97 | 2.46 | 0.54 | 32 | 500 | polymer | 8.57 | single | 3 | 20 | 8 |
| | 16 | 98 | 0.1 | 2 | 32 | 500 | polymer | 8.0 | single | 5 | 40 | 8 |
| | 17 | 76 | 17.5 | 6.5 | 32 | 1100 | polymer | 11.8 | single | 7 | 79 | 11 |
| | 18 | 76 | 17.5 | 6.5 | 29 | 500 | polymer | 11.8 | single | 6 | 72 | 12 |
| | 19 | 76 | 17.5 | 6.5 | 38 | 500 | polymer | 11.8 | single | 7 | 82 | 12 |
| | 20 | 76 | 17.5 | 6.5 | 38 | 500 | monomer | 11.8 | single | 7 | 82 | 12 |
| (8) | 1 | 100 | 0 | 0 | 32 | 500 | polymer | 8.0 | single | 3 | 19 | 6 |
| | 2 | 0 | 88 | 12 | 32 | 500 | polymer | 27.0 | single | 400 | 8000 | 20 |
| | 3 | 97 | 2.94 | 0.06 | 32 | 500 | polymer | 8.57 | single | 3 | 21 | 7 |

(1) Ethylene Mol. %
(2) Average Polymerization Degree
(3) Saturation Solubility %
(4) Oxygen Gas Transmission Rate
(5) Carbon Oxide Gas transmission Rate
(6) Ratio of Carbon Oxide Gas Transmission Rate to Oxygen Gas Transmission Rate
(7) Example
(8) Comparative Example

Table 2

| | Example 4 | | | |
|---|---|---|---|---|
| Outer Layer | LDPE | 38 μm (WVTR=17.8) | | |
| Intermediate Layer | Example 3 | 4 μm | | |
| Inner Layer | EVA | 20 μm (WVTR-72.4) | | |
| Relative Humidity of Air Outside (%) | Equilibrium Water Absorption Ratio (% by Weight) | Transmission Rate | | Transmission Rate Ratio $CO_2/O_2$ |
| | | $O_2$ | $CO_2$ | |
| 20 | 10.6 | 115 | 1590 | 13.8 |
| 50 | 12.1 | 250 | 3100 | 12.4 |
| 65 | 13.0 | 410 | 4650 | 11.3 |
| 80 | 14.2 | 720 | 6860 | 9.5 |
| 90 | 15.3 | 930 | 8030 | 8.6 |

Table 3

| | Example 10 | | | |
|---|---|---|---|---|
| Outer Layer | Ionomer | 38 μm (WVTR=14.9) | | |
| Intermediate Layer | Example 7 | 4 μm | | |
| Inner Layer | EVA | 20 μm (WVTR-72.4) | | |
| Relative Humidity of Air Outside (%) | Equilibrium Water Absorption Ratio (% by Weight) | Transmission Rate | | Transmission Rate Ratio $CO_2/O_2$ |
| | | $O_2$ | $CO_2$ | |
| 20 | 11.1 | 150 | 2030 | 13.5 |
| 50 | 12.6 | 310 | 3770 | 12.2 |
| 65 | 13.5 | 470 | 5150 | 11.0 |
| 80 | 14.5 | 720 | 6860 | 9.5 |
| 90 | 15.7 | 940 | 8040 | 8.6 |

# Table 4

| Outer Layer Intermediate Layer Inner Layer | Example 1 (see note) | | | | Comparative Example 1 (see note) | | | |
|---|---|---|---|---|---|---|---|---|
| Outer Layer | Ionomer | 30 μm (WVTR:18.9) | | | EVA | 15 μm (WVTR:96.5) | | |
| Intermediate | Composition | 7 μm | | | Composition | 7 μm | | |
| Layer | A | 20 μm (WVTR:72.4) | | | A | 30 μm (WVTR:18.9) | | |
| Inner Layer | EVA | | | | Ionomer | | | |
| Relative Humidity of an Outside (%) | Equilibrium Water Absorption Ratio (% by Weight) | Transmission Rate | | Transmission Rate Ratio | Equilibrium Water Absorption Ratio (% by Weight) | Transmission Rate | | Transmission Rate Ratio |
| (%) | (%) | $O_2$ | $CO_2$ | $CO_2/O_2$ | (%) | $O_2$ | $CO_2$ | $CO_2/O_2$ |
| 20 | 6.1 | 20 | 470 | 23.5 | 2.4 | 0.9 | 20 | 22.2 |
| 31 | 6.3 | 29 | 610 | 21.0 | 3.1 | 1.0 | 26 | 26.0 |
| 50 | 6.5 | 60 | 1060 | 17.7 | 4.2 | 1.5 | 40 | 26.7 |
| 65 | 6.8 | 110 | 1780 | 16.2 | 5.2 | 3.5 | 100 | 28.6 |
| 75 | 6.9 | 170 | 2430 | 14.3 | 5.8 | 10 | 260 | 26.0 |
| 82 | 7.0 | 220 | 3200 | 14.5 | 6.2 | 26 | 550 | 21.2 |
| 90 | 7.1 | 300 | 4200 | 14.0 | 6.7 | 84 | 1400 | 16.7 |
| 98 | 7.3 | 410 | 5580 | 13.6 | 7.2 | 320 | 4740 | 14.8 |

Composition A: EVOH (29 mol.% ethylene, 100 parts by weight) + polyethylene glycol (15 parts by weight)

Note: Stretched Film

## TABLE 5

| Outer Layer Intermediate Layer Inner Layer | Example 2 (see note) | | | | Comparative Example 2 (see note) | | | |
|---|---|---|---|---|---|---|---|---|
| Outer Layer | Ionomer | 30 μm (WVTR:18.9) | | | EVA | 15 μm (WVTR:96.5) | | |
| Intermediate | Composition | 7 μm | | | Composition | 7 μm | | |
| Layer | B | 20 μm (WVTR:72.4) | | | B | 30 μm (WVTR:18.9) | | |
| Inner Layer | EVA | | | | Ionomer | | | |
| Relative Humidity of an Outside (%) | Equilibrium Water Absorption Ratio (% by Weight) | Transmission Rate | | Transmission Rate Ratio | Equilibrium Water Absorption Ratio (% by Weight) | Transmission Rate | | Transmission Rate Ratio |
| (%) | (%) | $O_2$ | $CO_2$ | $CO_2/O_2$ | (%) | $O_2$ | $CO_2$ | $CO_2/O_2$ |
| 20 | 5.8 | 42 | 610 | 14.5 | 2.3 | 1.7 | 33 | 19.4 |
| 31 | 5.9 | 53 | 760 | 14.3 | 2.9 | 2.4 | 45 | 18.8 |
| 50 | 6.2 | 84 | 1260 | 15.0 | 4.0 | 4.8 | 86 | 17.9 |
| 65 | 6.4 | 130 | 2000 | 15.4 | 4.9 | 11 | 190 | 17.3 |
| 75 | 6.5 | 170 | 2740 | 16.1 | 5.5 | 26 | 380 | 14.6 |
| 82 | 6.6 | 210 | 3350 | 16.0 | 5.9 | 49 | 710 | 14.5 |
| 90 | 6.8 | 240 | 3960 | 16.5 | 6.3 | 120 | 1650 | 13.8 |
| 98 | 6.9 | 300 | 4660 | 15.5 | 6.8 | 290 | 4270 | 14.7 |

Composition B: EVOH (32 mol.% ethylene, 100 parts by weight) + polyethylene glycol (5 parts by weight)

Note: Stretched Film

**TABLE 6**

| Outer Layer<br>Intermediate<br>Layer<br>Inner Layer | Example 3 (see note) | | | | Comparative Example 3 (see note) | | | |
|---|---|---|---|---|---|---|---|---|
| | LDPE<br>Composition<br>A<br>EVA | 38 μm (WVTR:17.8)<br>7 μm<br>20 μm (WVTR:72.4) | | | EVA<br>Composition<br>A<br>LDPE | 20 μm (WVTR:72.4)<br>7 μm<br>30 μm (WVTR:17.8) | | |
| Relative<br>Humidity of an<br>Outside (%) | Equilibrium<br>Water<br>Absorption<br>Ratio (% by<br>Weight) | Transmission Rate | | Transmi-<br>ssion<br>Rate<br>Ratio | Equilibrium<br>Water<br>Absorption<br>Ratio (% by<br>Weight) | Transmission Rate | | Transm-<br>ission<br>Rate<br>Ratio |
| (%) | (%) | $O_2$ | $CO_2$ | $CO_2/O_2$ | (%) | $O_2$ | $CO_2$ | $CO_2/O_2$ |
| 20 | 6.1 | 22 | 500 | 22.7 | 2.6 | 0.9 | 22 | 24.4 |
| 31 | 2.9 | 34 | 680 | 20.0 | 3.3 | 1.0 | 27 | 27.0 |
| 50 | 4.0 | 70 | 1100 | 15.7 | 4.4 | 1.7 | 47 | 27.6 |
| 65 | 4.9 | 110 | 1740 | 15.8 | 5.2 | 4.1 | 120 | 29.3 |
| 75 | 5.5 | 170 | 2360 | 13.9 | 5.8 | 11 | 290 | 26.4 |
| 82 | 5.9 | 200 | 3100 | 15.5 | 6.2 | 27 | 600 | 22.2 |
| 90 | 6.3 | 300 | 4000 | 13.3 | 6.7 | 94 | 1500 | 16.0 |
| 98 | 6.8 | 390 | 5270 | 13.5 | 7.2 | 330 | 4570 | 13.8 |

Composition A: EVOH (29 mol.% ethylene, 100 parts by weight) + polyethylene glycol (5 parts by weight)

Note:   Non-stretched Film

**TABLE 7**

| Outer Layer<br>Intermediate<br>Layer<br>Inner Layer | Example 4 (see note) | | | | Comparative Example 4 (see note) | | | |
|---|---|---|---|---|---|---|---|---|
| | LDPE<br>Composition<br>B<br>EVA | 38 μm (WVTR:17.8)<br>7 μm<br>20 μm (WVTR:72.4) | | | EVA<br>Composition<br>B<br>Ionomer | 20 μm (WVTR:72.4)<br>7 μm<br>38 μm (WVTR:17.8) | | |
| Relative<br>Humidity of an<br>Outside (%) | Equilibrium<br>Water<br>Absorption<br>Ratio (% by<br>Weight) | Transmission Rate | | Transmi-<br>ssion<br>Rate<br>Ratio | Equilibrium<br>Water<br>Absorption<br>Ratio (% by<br>Weight) | Transmission Rate | | Transm-<br>ission<br>Rate<br>Ratio |
| (%) | (%) | $O_2$ | $CO_2$ | $CO_2/O_2$ | (%) | $O_2$ | $CO_2$ | $CO_2/O_2$ |
| 20 | 5.8 | 46 | 650 | 14.1 | 2.5 | 1.8 | 62 | 34.4 |
| 31 | 6.0 | 60 | 860 | 14.3 | 3.1 | 2.6 | 84 | 32.3 |
| 50 | 6.2 | 90 | 1340 | 14.9 | 4.1 | 5.4 | 170 | 31.5 |
| 65 | 6.4 | 130 | 2000 | 15.4 | 5.0 | 13 | 360 | 27.7 |
| 75 | 6.6 | 170 | 2660 | 15.6 | 5.5 | 29 | 510 | 17.6 |
| 82 | 6.7 | 210 | 3150 | 15.0 | 5.9 | 52 | 1020 | 19.6 |
| 90 | 6.8 | 240 | 3730 | 15.5 | 6.3 | 116 | 2460 | 21.2 |
| 98 | 6.9 | 310 | 4440 | 14.3 | 6.8 | 260 | 5770 | 22.2 |

Composition B: EVOH (32 mol.% ethylene, 100 parts by weight) + polyethylene glycol (5 parts by weight)

Note:   Non-stretched Film

**TABLE 8**

| | Example 5 (see note) | | | | Comparative Example 5 (see note) | | | |
|---|---|---|---|---|---|---|---|---|
| Outer Layer | EVA | 20 μm (WVTR:72.4) | | | LDPE | 20 μm (WVTR:33.8) | | |
| Intermediate Layer | Composition A | 7 μm 30 μm (WVTR:48.3) | | | Composition A | 19μm 17 μm (WVTR:39.8) | | |
| Inner Layer | EVA | | | | LDPE | | | |
| Relative Humidity of an Outside (%) | Equilibrium Water Absorption Ratio (% by Weight) | Transmission Rate | | Transmission Rate Ratio | Equilibrium Water Absorption Ratio (% by Weight) | Transmission Rate | | Transmission Rate Ratio |
| (%) | (%) | $O_2$ | $CO_2$ | $CO_2/O_2$ | (%) | $O_2$ | $CO_2$ | $CO_2/O_2$ |
| 20 | 3.8 | 0.9 | 26 | 28.9 | 4.6 | 0.7 | 21 | 30.0 |
| 31 | 4.3 | 1.2 | 34 | 28.3 | 5.0 | 1.1 | 32 | 29.1 |
| 50 | 5.1 | 2.6 | 78 | 30.0 | 5.6 | 2.7 | 76 | 28.1 |
| 65 | 5.8 | 7.6 | 200 | 26.3 | 6.1 | 7.8 | 190 | 24.4 |
| 75 | 6.2 | 20 | 430 | 21.5 | 6.5 | 18 | 350 | 19.4 |
| 82 | 6.5 | 44 | 780 | 17.7 | 6.5 | 32 | 550 | 17.2 |
| 90 | 6.9 | 110 | 1780 | 16.2 | 6.9 | 70 | 1100 | 15.7 |
| 98 | 7.2 | 290 | 4200 | 16.6 | 7.2 | 145 | 2370 | 16.3 |

Composition A: EVOH (29 mol.% ethylene, 100 parts by weight) + polyethylene glycol (5 parts by weight)

Note: Non-stretched Film

## Claims

1. A selectively gas permeable film composed of a composition comprising: 50-98% by weight of a saponified product of ethylene-vinyl acetate copolymer, wherein the ethylene content is 20-50 mol.% and the saponification value of the vinyl acetate component is 96 mol.% or higher; 0-45% by weight of polyvinyl alcohol having a saponification value of 60-95 mol.%; and 0.1% or higher by weight of at least one species having an average molecular weight of 4,000 or lower selected from the group consisting of monomers, oligomers, and polymers of either one of alkylene glycol or hydroxy acid, wherein the content of said at least one species does not exceed its saturation solubility for the sum of the saponified product of ethylene-vinyl acetate copolymer and the polyvinyl alcohol.

2. A selectively gas permeable film according to Claim 1, wherein said at least one species selected from monomers, oligomers, and polymers of either one of alkylene glycol or hydroxy acid is polyethylene glycol.

3. A selectively gas permeable film having at least three layers composed of an outer layer, an intermediate layer, and an inner layer, wherein the intermediate layer is composed of a composition according to Claim 1 or 2.

4. A selectively gas permeable film according to Claim 3, wherein the outer layer and the inner layer have a water vapor transmission rate satisfying the following equations:

$$W_0 < 50g^*m^{-2}{}^*24hr^{-1}$$

$$W_0 \leq W_1$$

wherein $W_0$ is the water vapor transmission rate of the outer layer at a temperature of 40°C and a humidity of 90%, and $W_1$ is the water vapor transmission rate of the inner layer at a temperature of 40°C and a humidity of 90%.

5. A selectively gas permeable film according to Claim 3, which comprises at least one reinforcing layer selected from paper, porous polyamide layers, porous polyester layers, and porous polypropylene layers.

6. A selectively gas permeable film for packaging water-containing foods, comprising a selectively gas permeable film according to any one of Claims 1-5.

7. A selectively gas permeable film according to Claim 6, wherein the water-containing foods are foods which generate carbon dioxide gas.

8. A selectively gas permeable film according to Claim 7, wherein the foods generating carbon dioxide gas are fermented foods.

9. A selectively gas permeable film according to Claim 8, wherein the fermented foods are cheese or kimchi.

10. A selectively gas permeable film according to Claim 6, wherein the water-containing foods are vegetables or fruit.